# EUROPEAN PATENT SPECIFICATION

(11) **EP 3 627 580 B1**
(45) Date of publication and mention of the grant of the patent: **26.11.2025**
(21) Application number: 19196109.3
(22) Date of filing: 09.09.2019
(51) Int. Cl.: H01M 10/658, H01M 50/124, H01M 50/204, H01M 50/222, H01M 50/227, H01M 50/229, H01M 50/231, H01M 50/233, H01M 50/271

(54) **BATTERY BOX**
BATTERIEDOSE
BOÎTIER DE BATTERIE

(30) Priority: 20.09.2018 CN 201821544482 U
(43) Date of publication of application: 25.03.2020
(73) Proprietor: Contemporary Amperex Technology (Hong Kong) Limited, Central, Central And Western District (HK)
(72) Inventor: DU, Jie, Ningde, Fujian 352100 (CN); MA, Lin, Ningde, Fujian 352100 (CN)
(74) Representative: Lorenz Seidler Gossel Part. mbB

(56) References cited:
- CN-U- 202 395 065
- JP-A- H0 562 708
- US-A1- 2012 225 331
- US-A1- 2015 064 514
- US-A1- 2015 194 706
- US-A1- 2016 254 507

## Description

### FIELD OF THE PRESENT INVENTION

The present invention relates to the field of battery, and particularly relates to a battery box. The features of the preamble of the independent claim are known from US 2015/0064514 A1. Related technologies are known from US 2012/225331 A1, US 2015/194706 A1, JP H0 562708 A, US 2016/254507 A1, and CN 202 395 065 U.

### BACKGROUND OF THE PRESENT INVENTION

At present, electric automobiles mainly use a battery module with a high voltage as a power source. In the process of use, when a secondary battery of the battery module is affected by factors, such as short-circuit, high temperature and the like, the secondary battery is prone to generate high-pressure gas therein, in turn, it is prone to cause thermal runaway, result in accidents such as combustion and explosion.

Generally, in the electric automobiles, the battery module needs to be placed in a battery box, and an upper box body of the battery box is usually made of LFT (long fiber reinforced thermoplastic) composites, blister PP (polypropylene) or ultra-thin aluminum alloy. However, when the battery box comprising this upper box body is subjected to the external fire, the upper box body will burn and melt, and the high temperature drips formed by the burning and melting of the upper box body will drop on the secondary battery of the battery module, thus the high temperature drips may cause the risk of combustion and explosion of the secondary battery.

### SUMMARY OF THE PRESENT INVENTION

In view of the problem exiting in the background, an object of the present invention is to provide a battery box, which can avoid high temperature drips formed by the accidental combustion of the upper box body of the battery box dropping onto the battery module, and reduce the risk of the combustion and explosion of the secondary battery. The present invention is defined in the independent claim.

In order to achieve the above object, the present invention provides a battery box, which comprises: a lower box body; an upper box body covering the lower box body; a battery module received in the lower box body and the upper box body; and a protecting member positioned above the battery module and at least covering the upper surface of the battery module to prevent high temperature drips formed by accidental combustion of the upper box body above the battery module from dropping onto the battery module, wherein the protecting member comprises a support layer and a refractory protective layer, wherein the refractory protective layer is a phlogophite layer, and wherein the support layer is a fiberglass cloth layer.

In one embodiment, the support layer and the refractory protective layer each are provided as one layer, and the refractory protective layer faces the upper box body, the support layer is positioned between the refractory protective layer and the battery module and secured on the battery module.

In one embodiment, the protecting member further comprises a binder which bonds the refractory protective layer together with the support layer.

In one embodiment, a thickness of the protecting member is from 0.13mm to 0.18mm; a thickness of the support layer is from 0.02mm to 0.05mm; a thickness of the binder is from 0.01mm to 0.02mm.

In one embodiment, the protecting member further covers at least a part of a side of the battery module.

In one embodiment, the protecting member extends to a side of the battery module and forms a closed annular receiving groove.

The present invention has the following beneficial effects: the protecting member of the battery box according to the present invention effectively blocks the high temperature drips formed by the accidental combustion of the upper box body of the battery box dropping onto the battery module, and reduces the risk of combustion and explosion of the battery module.

### BRIEF DESCRIPTION OF THE DRAWINGS

FIG. 1 is a schematic view of an embodiment of a battery box according to the present invention.
FIG. 2 is a schematic view of another embodiment of the battery box according to the present invention.
FIG. 3 is an enlarged view of the structure of a protecting member.

Reference numerals are represented as follows:
- 1: lower box body
- 2: upper box body
- 3: battery module
31 secondary battery
32 insulating cover
- 4: protecting member
41 support layer
42 refractory protective layer
43 receiving groove
- 5: safety vent
- 6: fixing bolt

### DETAILED DESCRIPTION

The appended figures illustrate an embodiment of the present invention and it is to be understood that the disclosed embodiment is merely exemplary of the invention, which may be embodied in various forms. Therefore, specific details disclosed herein are not to be interpreted as limiting, but merely as a basis for the claims and as a representative basis for teaching one skilled in the art to variously employ the present invention.

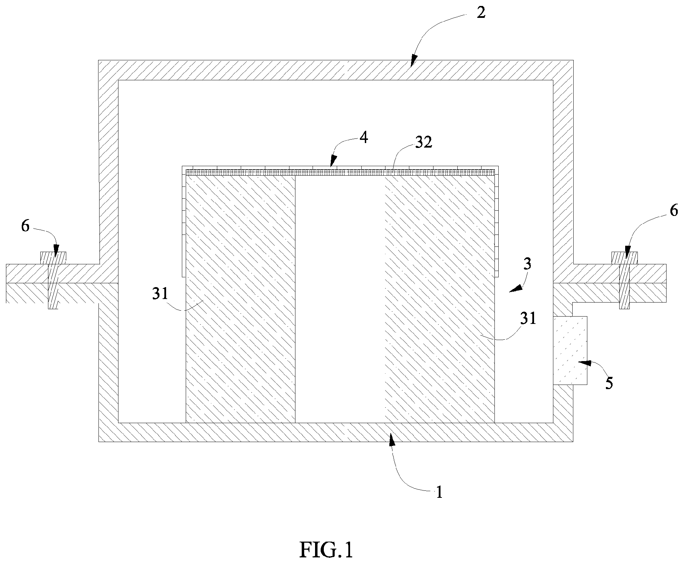

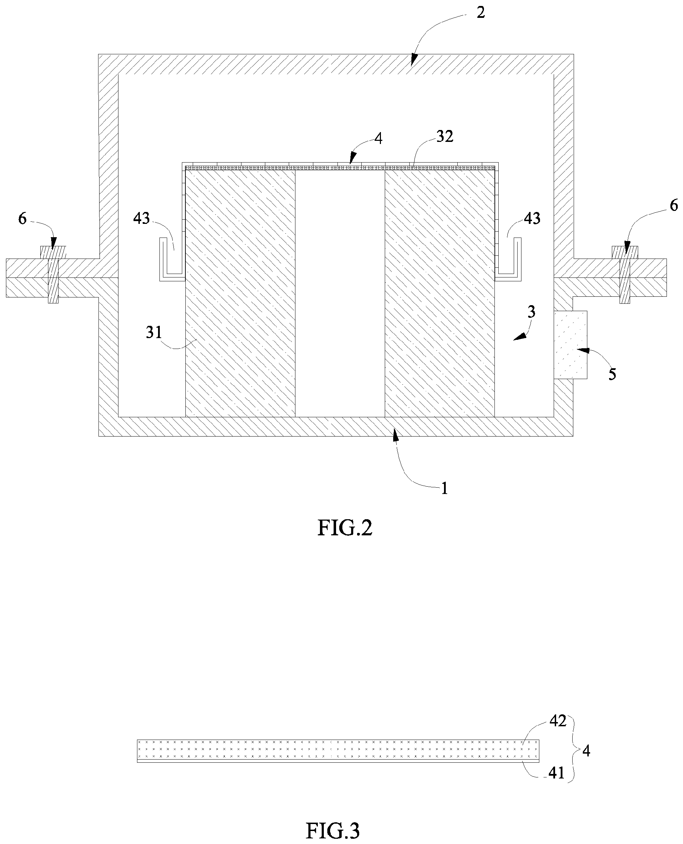

FIG. 1 is a schematic view of an embodiment of a battery box according to the present invention. FIG. 2 is a schematic view of another embodiment of the battery box according to the present invention.

A battery box according to the present invention comprises: a lower box body 1, an upper box body 2, a battery module 3 and a protecting member 4. The battery box further comprises a safety vent 5 and a fixing bolt 6.

The upper box body 2 covers the lower box body 1. The lower box body 1 is made of metal, preferably aluminum alloy. The upper box body 2 can be made of aluminum alloy, LFT (long fiber reinforced thermoplastic) composites or polypropylene.

The battery module 3 is received in the lower box body 1 and the upper box body 2. The battery module 3 comprises: a plurality of secondary batteries 31; and an insulating cover 32 fixed above the plurality of secondary batteries 31. The insulating cover 32 is usually made of plastic.

The protecting member 4 is positioned above the battery module 3 and at least covers an upper surface of the battery module 3 to prevent high temperature drips formed by accidental combustion of the upper box body 2 above the battery module 3 from dropping onto the battery module 3.

The safety vent 5 may be provided on a side surface of the lower box body 1. Of course, it is not limited thereto. The safety vent 5 may further be provided on a side surface of the upper box body 2. The position can be provided according to the specific situation.

The fixing bolt 6 fixes the upper box body 2 together with the lower box body 1.

When the battery box is subjected to the external fire, the upper box body 2 will burn and melt and form high temperature drips. If the high temperature drips drop directly onto the insulating cover 32 of the battery module 3 which is located below the upper box body 2, the insulating cover 32 will be burned through, which may cause the secondary battery 31 under the insulating cover 32 to be short-circuited, burn and explode. While in the battery box according to the present invention, the protecting member 4 is provided above the battery module 3 and at least covers the entire upper surface of the battery module 3, and the protecting member 4 has the properties of the high temperature and fire resistance, which effectively blocks the high temperature drips formed by the accidental combustion of the upper box body 2 of the battery box dropping onto the insulating cover 32 of the battery module 3, and avoids the high temperature drips burning through the insulating cover 32 and contacting the secondary battery 31, thereby reducing the risk of combustion and explosion of the battery module 3, enhancing the fire resistance function of the battery box.

FIG. 3 is an enlarged view of the structure of the protecting member .

The protecting member 4 comprises a support layer 41 and a refractory protective layer 42. The order that the support layer 41 and the refractory protective layer 42 are combined in the thickness direction of the protecting member 4 can be determined according to actual needs. For example, the one facing the upper box body 2 may be the refractory protective layer 42, or may be the support layer 41, and the one facing the battery module 3 may be the support layer 41 or the refractory protective layer 42, which is determined according to the number of layers provided by the support layer 41 and the refractory protective layer 42 and the order that the support layer 41 and the refractory protective layer 42 are combined in the thickness direction of the protecting member 4. The protecting member 4 may further form a receiving groove 43. The support layer 41 and the refractory protective layer 42 each are provided as at least one layer.

The support layer 41 and the refractory protective layer 42 of the protecting member 4 have various combinations, preferably, in an embodiment, as shown in FIG. 3, the support layer 41 and the refractory protective layer 42 each are provided as one layer, and the refractory protective layer 42 faces the upper box body 2, the support layer 41 is positioned between the refractory protective layer 42 and the battery module 3 and secured on the battery module 3. Of course, it is not limited thereto, and there are other combinations, that is, in another embodiment, the support layer 41 is provided as two layers, the refractory protective layer 42 is provided as one layer, and the refractory protective layer 42 is positioned between the two support layers 41.

In still another embodiment, the support layer 41 is provided as one layer, the refractory protective layer 42 is provided as two layers, and the support layer 41 is positioned between the two refractory protective layers 42.

In still another embodiment, the refractory protective layer 42 and the support layer 41 each are provided as two layers, and the refractory protective layers 42 and the support layers 41 are alternately arranged in the thickness direction.

In the above various embodiments, on the basis of ensuring the fire resistance property, the refractory protective layer 42 and the support layer 41 each are provided as one layer in order to reduce the overall weight of the battery box and increase the energy density of the battery box. The support layer 41 is a fiberglass cloth layer.

The refractory protective layer 42 is a mica layer, more specifically a phlogopite layer. The phlogopite layer comprises a plurality of mica papers laminated together and a binder which binds every two adjacent mica papers (not shown) together. The binder is selected from methylphenyl silicone resin or acrylic adhesive. The methylphenyl silicone resin or the acrylic adhesive is soft adhesive, which can ensure the structural integrity between mica papers on the one hand, and ensure that the protecting member 4 can be folded freely and the adjacent mica papers are not separated from each other on the other hand. Due to the low strength and brittleness of the mica paper, the fiber cloth provides sufficient anti-tear strength for the mica paper, so that the mica paper can resist the gravity impact of the high temperature drips, thereby effectively providing the fire resistance property.

The material of the protecting member 4 is lighter in weight and lower in cost in comparison with the fire-resistant heat-isolating cloth added in the box (the upper box body 2 and the lower box body 1) in the prior art.

The protecting member 4 further comprises a binder (not shown) which bonds the refractory protective layer 42 together with the support layer 41. The binder is selected from methylphenyl silicone resin or acrylic adhesive. The methyl-phenyl silicone resin or the acrylic adhesive is a soft adesive, which ensures that the protecting member 4 can be folded freely and the refractory protective layer 42 is not separated from the support layer 41. The refractory protective layer 42, the binder, the support layer 41 form the protecting member 4 by pressing.

A thickness of the protecting member 4 is from 0.13 mm to 0.18 mm, preferably is 0.15 mm. A thickness of the support layer 41 is from 0.02 mm to 0.05 mm, preferably is 0.04 mm. A thickness of the binder which bonds the refractory protective layer 42 together with the support layer 41 is from 0.01mm to 0.02mm. The thickness of the protecting member 4 is controlled within a certain range, which can effectively reduce the overall weight of the battery box, increase the energy density of the battery box, and realize lightness of the battery box.

In an embodiment, the protecting member 4 further covers at least a part of the side of the battery module 3. Preferably, the protecting member 4 further covers the whole side of the battery module 3, so that when the high temperature drips drop onto a portion of the protecting member 4 covering above the battery module 3 and flow down from both sides of the protecting member 4, the protecting member 4 can avoid the side of the battery module 3 from contacting the high temperature drips, thereby improving the safety of the battery module 3.

In another embodiment, as shown in FIG. 2, the protecting member 4 further extends to the side of the battery module 3 and forms a closed annular aforementioned receiving groove 43. An inner side of the receiving groove 43 is a refractory protective layer 42. When the high temperature drips drop onto the portion of the protecting member 4 covering above the battery module 3 and flow down from both sides of the protecting member 4, the receiving groove 43 can receive the high temperature drips to prevent the high temperature drips from contacting the side of the battery module 3 and damaging the battery module 3.

## Claims

1. A battery box, comprising:
a lower box body (1);
an upper box body (2) covering the lower box body(1);
a battery module (3) received in the lower box body(1) and the upper box body (2); and
a protecting member (4) positioned above the battery module (3) and at least covering the upper surface of the battery module (3) to prevent high temperature drips formed by accidental combustion of the upper box body (2) above the battery module (3) from dropping onto the battery module (3);
wherein the protecting member (4) comprises a support layer (41) and a refractory protective layer (42),
**characterized in that**
the refractory protective layer (42) is a phlogopite layer, the support layer (41) is a fiberglass cloth layer.

2. The battery box according to claim 1, wherein the support layer (41) and the refractory protective layer (42) each are provided as one layer, and the refractory protective layer (42) faces the upper box body (2), the support layer (41) is positioned between the refractory protective layer (42) and the battery module (3) and secured on the battery module (3).

3. The battery box according to claim 1, wherein the protecting member (4) further comprises a binder which bonds the refractory protective layer (42) together with the support layer (41).

4. The battery box according to claim 3, wherein a thickness of the protecting member (4) is from 0.13mm to 0.18mm; a thickness of the support layer (41) is from 0.02mm to 0.05mm; a thickness of the binder is from 0.01mm to 0.02mm.

5. The battery box according to claim 1, wherein the protecting member (4) further covers at least a part of a side of the battery module (3).

6. The battery box according to claim 1, wherein the protecting member (4) extends to a side of the battery module (3) and forms a closed annular receiving groove (43).

7. The battery box according to claim 1, wherein a thickness of the protecting member (4) is from 0.13mm to 0.18mm.

8. The battery box according to claim 1, wherein a thickness of the support layer (41) is from 0.02mm to 0.05mm.

9. The battery box according to claim 3, wherein a thickness of the binder is from 0.01mm to 0.02mm.

10. The battery box according to claim 3, wherein the binder is methylphenyl silicone resin or acrylic adhesive.

## Patentansprüche

1. Batteriekasten, umfassend:
einen unteren Kastenkörper (1);
einen oberen Kastenkörper (2), der den unteren Kastenkörper (1) abdeckt;
ein Batteriemodul (3), das in dem unteren Kastenkörper (1) und dem oberen Kastenkörper (2) aufgenommen ist; und
ein Schutzelement (4), das oberhalb des Batteriemoduls (3) positioniert ist und mindestens die Oberseite des Batteriemoduls (3) abdeckt, um zu verhindern, dass Tropfen mit hoher Temperatur, die durch unbeabsichtigte Verbrennung des oberen Kastenkörpers (2) oberhalb des Batteriemoduls (3) ausgebildet werden, auf das Batteriemodul (3) fallen;
wobei das Schutzelement (4) eine Trägerschicht (41) und eine feuerfeste Schutzschicht (42) umfasst,
**dadurch gekennzeichnet, dass**
die feuerfeste Schutzschicht (42) eine Phlogopitschicht ist, die Trägerschicht (41) eine Glasfasergewebeschicht ist.

2. Batteriekasten nach Anspruch 1, wobei die Trägerschicht (41) und die feuerfeste Schutzschicht (42) jeweils als eine Schicht bereitgestellt sind und die feuerfeste Schutzschicht (42) dem oberen Kastenkörper (2) zugewandt ist, wobei die Trägerschicht (41) zwischen der feuerfesten Schutzschicht (42) und dem Batteriemodul (3) positioniert und an dem Batteriemodul (3) befestigt ist.

3. Batteriekasten nach Anspruch 1, wobei das Schutzelement (4) ferner ein Bindemittel umfasst, das die feuerfeste Schutzschicht (42) mit der Trägerschicht (41) verbindet.

4. Batteriekasten nach Anspruch 3, wobei die Dicke des Schutzelements (4) zwischen 0,13 mm und 0,18 mm beträgt, die Dicke der Trägerschicht (41) zwischen 0,02 mm und 0,05 mm beträgt und die Dicke des Bindemittels zwischen 0,01 mm und 0,02 mm beträgt.

5. Batteriekasten nach Anspruch 1, wobei das Schutzelement (4) ferner mindestens einen Teil einer Seite des Batteriemoduls (3) abdeckt.

6. Batteriekasten nach Anspruch 1, wobei sich das Schutzelement (4) bis zu einer Seite des Batteriemoduls (3) erstreckt und eine geschlossene ringförmige Aufnahmenut (43) ausbildet.

7. Batteriekasten nach Anspruch 1, wobei die Dicke des Schutzelements (4) zwischen 0,13 mm und 0,18 mm beträgt.

8. Batteriekasten nach Anspruch 1, wobei die Dicke der Trägerschicht (41) zwischen 0,02 mm und 0,05 mm beträgt.

9. Batteriekasten nach Anspruch 3, wobei die Dicke des Bindemittels zwischen 0,01 mm und 0,02 mm beträgt.

10. Batteriekasten nach Anspruch 3, wobei das Bindemittel Methylphenylsilikonharz oder Acrylklebstoff ist.

## Revendications

1. Boîtier de batterie, le boîtier comprenant :
un corps de boîtier inférieur (1) ;
un corps de boîtier supérieur (2) recouvrant le corps de boîtier inférieur (1) ;
un module de batterie (3) reçu à l'intérieur du corps de boîtier inférieur (1) et du corps de boîtier supérieur (2) ; et
un élément de protection (4) positionné au-dessus du module de batterie (3) et recouvrant au moins la surface supérieure du module de batterie (3) afin d'empêcher des gouttes à haute température, formées par combustion accidentelle du corps de boîtier supérieur (2) au-dessus du module de batterie (3), de tomber sur le module de batterie (3) ;
dans lequel l'élément de protection (4) comprend une couche de support (41) et une couche protectrice réfractaire (42),
**caractérisé en ce que**
la couche protectrice réfractaire (42) est une couche de phlogopite, et la couche de support (41) est une couche de toile de fibre de verre.

2. Le boîtier de batterie selon la revendication 1, dans lequel la couche de support (41) et la couche protectrice réfractaire (42) sont fournies chacune comme une couche, la couche protectrice réfractaire (42) fait face au corps de boîtier supérieur (2), et la couche de support (41) est positionnée entre la couche protectrice réfractaire (42) et le module de batterie (3) et fixée sur le module de batterie (3).

3. Le boîtier de batterie selon la revendication 1, dans lequel l'élément de protection (4) comprend en outre un liant servant à lier ensemble la couche protectrice réfractaire (42) et la couche de support (41).

4. Le boîtier de batterie selon la revendication 3, dans lequel une épaisseur de l'élément de protection (4) est comprise entre 0,13 mm et 0,18 mm ; une épaisseur de la couche de support (41) est comprise entre 0,02 mm et 0,05 mm ; et une épaisseur du liant est comprise entre 0,01 mm et 0,02 mm.

5. Le boîtier de batterie selon la revendication 1, dans lequel l'élément de protection (4) recouvre en outre au moins une partie d'un côté du module de batterie (3).

6. Le boîtier de batterie selon la revendication 1, dans lequel l'élément de protection (4) s'étend vers un côté du module de batterie (3) et forme une rainure de réception annulaire fermée (43).

7. Le boîtier de batterie selon la revendication 1, dans lequel une épaisseur de l'élément de protection (4) est comprise entre 0,13 mm et 0,18 mm.

8. Le boîtier de batterie selon la revendication 1, dans lequel une épaisseur de la couche de support (41) est comprise entre 0,02 mm et 0,05 mm.

9. Le boîtier de batterie selon la revendication 3, dans lequel une épaisseur du liant est comprise entre 0,01 mm et 0,02 mm.

10. Le boîtier de batterie selon la revendication 3, dans lequel le liant est une résine de méthylphényl silicone ou un adhésif d'acrylate.
